# EUROPÄISCHE PATENTSCHRIFT

(11) **EP 3 418 590 B1**
(45) Veröffentlichungstag und Bekanntmachung des Hinweises auf die Patenterteilung: **25.03.2020**
(21) Anmeldenummer: 18175678.4
(22) Anmeldetag: 04.06.2018
(51) Int. Cl.: F16B 13/08

(54) **KIPPDÜBEL**
TOGGLE FASTENER
BENNE BASCULANTE

(30) Priorität: 21.06.2017 DE 102017113639
(43) Veröffentlichungstag der Anmeldung: 26.12.2018
(73) Patentinhaber: fischerwerke GmbH & Co. KG, 72178 Waldachtal (DE)
(72) Erfinder: Daly, Aaron, 72285 Pfalzgrafenweiler (DE)
(74) Vertreter: Suchy, Ulrich Johannes

(56) Entgegenhaltungen:
- DE-A1-102015 116 426

## Beschreibung

Die Erfindung betrifft einen Kippdübel mit den Merkmalen des Oberbegriffs des Anspruchs 1.

Ein gattungsgemäßer Kippdübel ist aus der Druckschrift DE 10 2015 116 426 A1 bekannt. Der Kippdübel dient zum Befestigen eines Gegenstandes an einem dünnwandigen Bauteil, beispielsweise an einer Gipskartonplatte, wie sie im Trockenbau zur Herstellung von Wänden und zur Verkleidung von Decken Verwendung findet. Ein "dünnwandiges" Bauteil kann aber auch die Wandung eines Hochlochziegels oder die einer Sanitärkeramik sein, wobei die Aufzählung nicht abschließend ist. Im verbauten Zustand ist die Rückseite des Bauteils im Regelfall nicht zugänglich, sondern es befindet sich ein Hohlraum hinter dem Bauteil. Ist das Bauteil beispielsweise eine Gipskartonplatte und soll ein Gegenstand daran befestigt werden, wird die Gipskartonplatte zunächst durchbohrt und durch das Bohrloch wird ein Balken des Kippdübels in den Hohlraum hinter der Platte eingebracht. Der Balken ist bei dem aus der Druckschrift DE 10 2015 116 426 A1 bekannten Kippdübel ein entlang einer Balkenlängsachse lang gestrecktes, im Wesentlichen zylindrisches Bauteil aus Kunststoff, das mittig eine quer verlaufende Öffnung mit einem Innengewinde zur Aufnahme einer Schraube aufweist. Mit dem Balken ist einstückig ein Band verbunden, das elastisch und/oder plastisch biegbar ist. Das Band ist dadurch schwenkbar mit dem Balken verbunden. Durch die schwenkbare Verbindung kann der Balken gegenüber dem Band gekippt werden, so dass er durch ein Bohrloch im dünnwandigen Bauteil geführt und im Hohlraum hinter dem Bauteil wieder gekippt und zur Anlage an die Rückseite des Bauteils gebracht werden kann. An dem Band ist eine Hülse befestigt, die entlang des Bands zum Balken hin bewegt und zur Fixierung des Balkens in das Bohrloch eingeführt und gegen das Bauteil verspannt werden kann. Das Band weist hierfür Zahnelemente auf, in die ein Rastelement der Hülse eingreift und hierdurch eine Rückbewegung der Hülse vom Balken weg verhindern. Die Hülse umfasst einen Bund, der in einer Endstellung an der Außenseite des Bauteils anliegt. In der Endstellung kann ein Gegenstand auf das Bauteil aufgesetzt und mit einer Schraube am Kippdübel und damit am Bauteil befestigt werden.

Wäre die Schraube einfach durch die Hülse steckbar, könnte eine axiale Kraft auf die Schraube bewirken, dass der Balken von der unzugänglichen Seite des dünnwandigen Bauteils abgedrückt wird. Eine axiale Kraft wird insbesondere beim Einschrauben mit einem Akkuschrauber auf die Schraube ausgeübt. Trifft die Schraube nicht unmittelbar die Öffnung mit dem Innengewinde, so bewirkt die Kraft, dass der Balken gegebenenfalls ausweicht, derart dass die Öffnung noch schlechter zu finden ist. Die Druckschrift DE 10 2015 116 426 A1 schlägt daher vor, dass die Schraube nicht durch die Hülse steckbar ist, sondern durch die Hülse geschraubt wird. Die Hülse weist dazu insbesondere ein federndes Element zu einem Gewindeeingriff auf. Durch den Gewindeeingriff werden axiale Kräfte von der Schraube über die Hülse auf das dünnwandige Bauteil abgeleitet, so dass die Schraube den Balken nicht ungewollt wegdrückt. Ein federndes Element hat den Vorteil, dass unterschiedliche Schraubendurchmesser eingeschraubt werden können.

Nachteilig an der bekannten Lösung ist, dass das Einschrauben gegenüber dem Einstecken mehr Zeit benötigt.

Aufgabe der Erfindung ist daher, einen Kippdübel zu schaffen, der in seiner Handhabung anwenderfreundlicher ist.

Diese Aufgabe wird erfindungsgemäß durch einen Kippdübel mit den Merkmalen des Anspruchs 1 gelöst. Der erfindungsgemäße Kippdübel zur Befestigung eines Gegenstandes an einem dünnwandigen Bauteil, beispielsweise an einer Gipskartonplatte, weist einen Balken zum Hintergreifen des Bauteils, ein Band, das mit dem Balken verbunden ist, sowie eine Hülse auf, die am Band angeordnet ist. Der Balken ist insbesondere entlang einer Balkenlängsachse lang gestreckt, das heißt, er kann durch einen Körper, insbesondere durch einen Quader umschrieben werden, der in einer Dimension, der Länge in Richtung der Balkenlängsachse, um ein Mehrfaches größer ist, als in den anderen beiden Dimensionen. Die beiden anderen Dimensionen sind die Höhe und die Breite, die orthogonal zueinander und orthogonal zur Balkenlängsachse verlaufen. Der Balken weist eine Öffnung zur Aufnahme einer Schraube auf, die insbesondere als Durchgangsöffnung ausgestaltet ist. Die Öffnung erstreckt sich entlang einer Öffnungslängsachse quer zur Balkenlängsachse, insbesondere im Wesentlichen orthogonal zur Balkenlängsachse. Befindet sich der Balken des Kippdübels im eingebauten Zustand in einer Endstellung in einem Hohlraum hinter dem Bauteil, so ist die Öffnungslängsachse derart in Richtung der Höhe des Balkens orientiert, dass die Schraube durch das Bauteil, insbesondere durch ein Bohrloch im Bauteil hindurch in die Öffnung eingeführt werden kann. Die Schraube, beispielsweise eine Holzschraube oder eine Schraube mit metrischem Gewinde, kann in der Öffnung oder in einem gesonderten Befestigungselement des Kippdübels befestigt werden. Insbesondere weist die Öffnung hierfür ein Innengewinde auf. Das mit dem Balken verbundene Band dient zum Halten und zur Positionierung des Balkens bei der Montage, wobei insbesondere genau ein Band mit dem Balken verbunden ist. Das Band ist insbesondere lang gestreckt, insbesondere aus Kunststoff hergestellt und weist insbesondere Zahnelemente auf. Das Band ist insbesondere in sich biegesteif, aber beweglich am Balken befestigt. Insbesondere kann der Balken zum Einführen in ein Bohrloch gegenüber dem Band gekippt werden. Die Hülse weist eine Durchführöffnung zum Durchführen des Bands auf, deren Querschnitt mit dem Querschnitt des Bands korrespondiert und insbesondere dem Querschnitt des Bands entspricht. Die Durchführöffnung kann mit einem im Folgenden noch beschriebenen Schraubenloch verbunden oder von diesem vollständig getrennt sein. Auch kann die Durchführöffnung zum Umfang der Hülse hin teilweise offen sein. Die Hülse weist insbesondere mindestens ein Rastelement zum Eingriff in die Zahnelemente auf, die am Band angeordnet sind. Die Hülse weist ein Schraubenloch zum Durchführen der Schraube auf, wobei sich das Schraubenloch entlang einer Längsachse erstreckt, die insbesondere mit der Hülsenlängsachse übereinstimmt. Das Schraubenloch ist insbesondere über den Umfang geschlossen, kann aber auch zur Durchführöffnung und/oder zum Umfang der Hülse hin teilweise offen sein. Die Hülse weist ein Eingriffselement für einen Gewindeeingriff der Schraube auf. Das Eingriffselement ragt radial in das Schraubenloch, wobei sich "radial" auf die Längsachse des Schraubenlochs bezieht. Das Eingriffselement muss dabei nicht unbedingt innerhalb der Längserstreckung des Schraubenlochs angeordnet sein, um einen Gewindeeingriff zu bewirken, sondern kann auch in Längsrichtung versetzt angeordnet sein, was hier auch noch als "radial in das Schraubenloch ragend" verstanden werden soll.

Kennzeichnend für den erfindungsgemäßen Kippdübel ist, dass das Eingriffselement ein Manipulierelement derart aufweist, dass es radial zur Längsachse der Hülse nach außen bewegbar ist. Das Eingriffselement mit dem Manipulierelement ist erfindungsgemäß so gestaltet, dass diese Bewegung von einer dem Balken abgewandten Rückseite der Hülse aus erfolgt, dass also das Eingriffselement von der dem Bediener zugewandten und zugänglichen Rückseite aus manipulierbar ist. Dies ermöglicht, dass eine Schraube durch das Schraubenloch eingeschoben werden kann, während das Eingriffselement mittels des Manipulierelements radial zur Seite bewegt wird, was im Folgendes als "deaktivieren" bezeichnet wird. Ist die Schraube derart eingesteckt, dass das in Einbringrichtung vordere Ende am Balken anstößt, so kann das Eingriffselement insbesondere wieder radial nach innen bewegt werden oder bewegt sich selbständig in diese Richtung, derart dass das Gewinde der Schraube in Eingriff kommt. Dies wird nachfolgend als "aktivieren" bezeichnet. Beim Einschrauben der Schraube können dann wiederum axiale Kräfte von der Schraube über das Eingriffselement in die Hülse und von dieser in das dünnwandige Bauteil übertragen werden. Das Deaktivieren ermöglicht wie erwähnt das Einschieben der Schraube, was erheblich schneller ist, als das drehende Einführen.

In einer bevorzugten Ausführungsform ist das Eingriffselement schwenkbar mit einem Grundkörper der Hülse verbunden, wobei "schwenkbar" hier nicht eng im Sinne einer räumlich genau definierten Schwenkachse gemeint ist, sondern beispielsweise auch die Bewegung eines Biegebalkens umfasst, mit einer Schwenkachse in etwa im Bereich der Anbindung des Biegebalkens. Die Schwenkachse ist vorzugsweise am der Rückseite der Hülse gegenüberliegenden Ende des Eingriffselements angeordnet. Anders ausgedrückt liegt die Schwenkachse vorn am Eingriffselement, wobei sich "vorne" und "hinten" hier stets auf die Einbringrichtung der Schraube bezieht. Gegenüber der umgekehrten Anordnung, wie sie aus der Druckschrift DE 10 2015 116 426 A1 bekannt ist, hat dies den Vorteil, dass eine deutlich steifere Abstützung der Schraube durch das Eingriffselement erreicht wird und das Eingriffselement bei axialen Kräften auf die Schraube insbesondere nicht radial nach außen ausweicht.

Vorzugsweise ist das Eingriffselement federnd mit einem Grundkörper der Hülse verbunden. Gegenüber dem aus der Druckschrift DE 10 2015 116 426 A1 bekannten Kippdübel wird hierdurch nicht nur eine Anpassung auf unterschiedliche Schraubendurchmesser möglich, sondern es kann insbesondere eine automatische Rückstellung radial nach innen zum Aktivieren nach einer Deaktivierung erfolgen.

In einer bevorzugten Ausführungsform ist das Eingriffselement als abgewinkelter Federarm ausgebildet. Ein erster Schenkel des Federarms weist einen radial zur Längsachse nach innen ragenden Vorsprung auf, der dem Eingriff der Schraube dient.

Der zweite Schenkel bildet das Manipulierelement. Dies schließt insbesondere nicht aus, dass an dem Schenkel weitere Elemente zur Bildung des Manipulierelements angeordnet sind. Vorzugsweise erstreckt sich der erste Schenkel im Wesentlichen parallel zur Längsachse der Hülse und der zweite Schenkel senkrecht oder schräg zur Längsachse. Dadurch wird erreicht, dass der erste Schenkel kompakt im Inneren der Hülse und der zweite Schenkel zugänglich auf der Rückseite angeordnet sein kann. Durch eine schräge Anordnung des zweiten Schenkels kann dieser etwas gegenüber dem Grundkörper der Hülse nach hinten abstehen und zur Manipulation des Eingriffselements einfach nach vorne, also zum dünnwandigen Bauteil hin gedrückt werden. Das derartige Aktivieren kann beispielsweise unmittelbar mit einem Finger oder auch durch Anpressen eines zu befestigenden Gegenstands erfolgen. Zum Deaktivieren wird dann der Druck wieder nachgelassen. Soweit der Gegenstand beim weiteren Anziehen der Schraube schließlich gegen die Hülse und damit gegen den zweiten Schenkel gepresst wird, ist dies unschädlich, da es zu diesem Zeitpunkt nicht mehr auf den Eingriff der Schraube im Bereich der Hülse ankommt.

Um eine möglichst gute Abstützung axialer Kräfte von der Schraube auf die Hülse zu erreichen, schlägt die Erfindung vor, dass das Eingriffselement eine zur Rückseite der Hülse gewandte Aufstandsfläche für die Schraube aufweist. Die Aufstandsfläche erstreckt sich im Wesentlichen senkrecht zur Längsachse.

Vorzugsweise weist das Eingriffselement zur anderen Seite hin, also der Rückseite der Hülse abgewandt, eine Schrägfläche auf, die sich schräg zur Längsachse erstreckt. Hierdurch wird erreicht, dass sich die Schraube mit einer definierten Kraft aus der Hülse ziehen lässt, da die Schrägfläche ein Ausweichen ermöglicht, insbesondere bei einer federnden Verbindung des Eingriffselements mit dem Grundkörper der Hülse. Dies ist wichtig, da die Schraube zwar einen vorläufigen Halt in der Hülse finden soll, beispielsweise bei einer Überkopfmontage, den eigentlichen Halt jedoch durch Einschrauben in den Balken erhält. Eine fehlerhafte Montage, bei der die Schraube nicht in den Balken eingeschraubt ist, wird somit erkannt, weil die Schraube bei einem definierten Zug, der deutlich unter einer vorgesehen Last liegt, aus der Hülse gezogen wird.

Dem Kippdübel ist vorzugsweise eine Schraube mit einem Maschinengewinde zugeordnet, also der Kippdübel mit einer Schraube kombiniert, deren Außengewinde zur Öffnung und/oder zu einem Befestigungselement des Kippdübels korrespondiert, in der oder an dem die Schraube befestigbar ist. Als "Maschinengewinde" wird hier insbesondere ein metrisches Gewinde oder ein Inch-Gewinde (beispielsweise Whitworth-Gewinde oder American Standard Unified Screw Thread) verstanden.

Die Erfindung wird nachfolgend anhand eines Ausführungsbeispiels näher erläutert.

Es zeigen:
- Figur 1: einen erfindungsgemäßen Kippdübel mit einer Hülse in einer Montagestellung in vereinfachter, teilweise geschnittener Seitenansicht;
- Figur 2: die Hülse des erfindungsgemäßen Kippdübels in einer perspektivischen Darstellung; und
- Figur 3: die Hülse des erfindungsgemäßen Kippdübels in einer perspektivischen Schnittdarstellung mit einer Schraube.

Der in den Figuren dargestellte, erfindungsgemäße Kippdübel 1 zur Befestigung eines Gegenstandes (nicht dargestellt) an einem dünnwandigen Bauteil 2, hier einer Gipskartonplatte 3, weist einen im Wesentlichen zylindrischen Balken 4 aus Kunststoff, ein mit dem Balken 4 einstückig verbundenes Band 5 und eine Hülse 6 aus Kunststoff auf, die am Band 5 angeordnet ist.

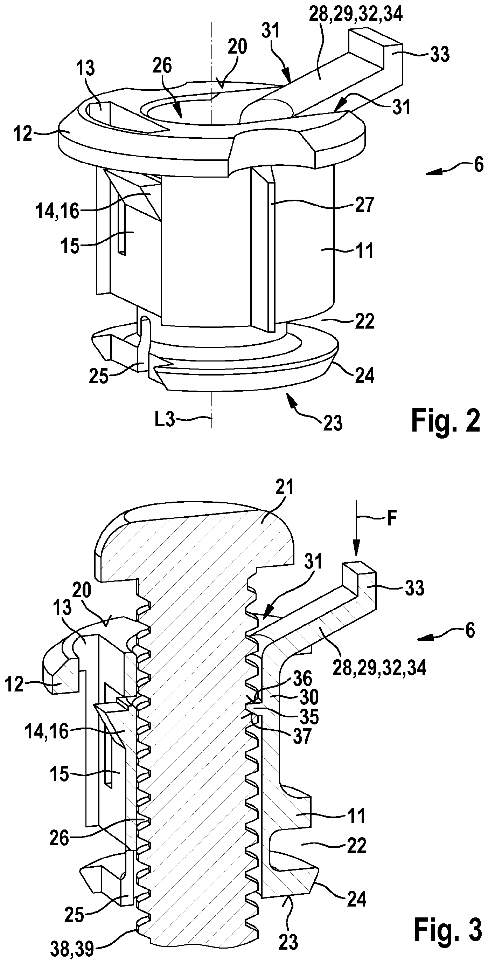

Der Balken 4 dient zum Hintergreifen der Gipskartonplatte 3. Er erstreckt sich entlang einer Balkenlängsachse L1 und weist mittig eine Öffnung 7 mit einem Innengewinde 8 auf. Die Öffnung 7 erstreckt sich entlang einer Öffnungslängsachse L2, die senkrecht zur Balkenlängsachse L1 verläuft. Anders ausgedrückt durchsetzt die Öffnung 7 den Balken 4 quer. Das Band 5 ist neben der Öffnung 7 an den Balken 4 angebunden und erstreckt sich im entspannten Zustand (nicht dargestellt) parallel zur Öffnungslängsachse L2, also senkrecht zur Balkenlängsachse L1. Das Band 5 ist elastisch verformbar, wodurch der Balken 4 schwenkbar gegenüber dem Band 5 ist. Da das Band 5 sich bis zum Balken 4 erstreckt, ist genau genommen der Balken 4 nicht gegenüber dem Band 5 als Ganzem, sondern nur gegenüber dessen Haupterstreckung schwenkbar. Das Band 5 weist auf einer der Öffnung 7 zugewandten Seite Zahnelemente 9 auf, die entlang der Längserstreckung des Bands 5 hintereinander angeordnet sind. Am dem Balken 4 abgewandten Ende weist das Band 5 ein Griffelement 10 auf. Die Hülse 6 weist einen zylindrischen Grundkörper 11 auf mit einem umlaufend abstehenden Kragen 12 auf der dem Balken 4 abgewandten Seite der Hülse 6. Diese Seite wird im Folgenden als "hinten" und die gegenüberliegende, dem Balken 4 zugewandte Seite als "vorne" bezeichnet. Die Hülse 6 erstreckt sich von hinten nach vorn entlang einer Längsachse L3. Der Kragen 12 wird parallel zur Längsachse L3 von einer Durchführöffnung 13 für das Band 5 durchdrungen. Vor der Durchführöffnung 13 steht vom Grundkörper 11 ein Rastelement 14 in Form einer Federlasche 15 mit einer Nase 16 (siehe Figuren 2 und 3) ab. Durch die Durchführöffnung 13 wird das Band 5 an dem Rastelement 14 vorbei geführt, so dass das Rastelement 14 in die Zahnelemente 9 eingreift. Die Zahnelemente 9 und das Rastelement 14 sind so ausgebildet, dass die Hülse 6 gegenüber dem Band 5 nach vorne, jedoch nicht wieder nach hinten geschoben werden kann. Sollte zur Korrektur der Montage ein Verschieben nach hinten notwendig sein, können die Zahnelemente 9 und das Rastelement 14 durch Verkippen der Hülse 6 außer Eingriff gebracht werden (nicht dargestellt), worauf es bezüglich der Erfindung jedoch nicht ankommt.

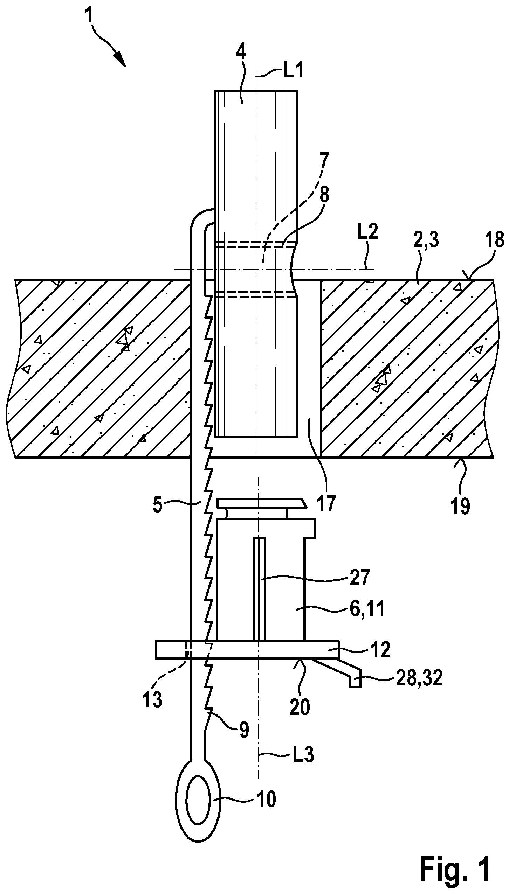

Zur Herstellung einer Befestigungsanordnung mit dem Kippdübel 1 wird zunächst ein Bohrloch 17 in der Gipskartonplatte 3 erstellt. Der Kippdübel 1 wird dann mit dem Balken 4 voran in das Bohrloch 17 gesteckt, wie dies in Figur 1 dargestellt ist. Dazu wird der Balken 4 gegenüber dem Band 5 verschwenkt. Sobald der Balken 4 das Bohrloch 17 vollständig passiert hat, schwenkt er aufgrund der Elastizität des Bands 5 in seine Ausgangslage zurück, steht also wieder senkrecht zum Band 5 (nicht dargestellt). Mit dem Band 5 wird der Balken 4 gegen die nicht zugängliche Hinterseite 18 der Gipskartonplatte 3 gezogen und die Hülse 6 entlang des Bands 5 nach vorne bis in das Bohrloch 17 geschoben, bis der Kragen 12 auf einer Vorderseite 19 der Gipskartonplatte 3 anliegt (nicht dargestellt). Das Band 5 dient bei diesem Vorgang zum Halten und zur Positionierung des Balkens 4. Anschließend kann das überstehende Ende des Bands 5 abgeschnitten oder abgebrochen werden und der zu befestigende Gegenstand auf den Kragen 12, der eine Rückseite 20 der Hülse 6 bildet, aufgesetzt werden (nicht dargestellt). Mit einer Schraube 21, auf die im Zusammenhang mit der Beschreibung der Figuren 2 und 3 noch näher eingegangen wird, erfolgt die eigentliche Befestigung des Gegenstands. Die Schraube 21 wird durch ein Aufnahmeloch oder dergleichen des Gegenstands, sowie durch die Hülse 6 hindurch bis zum Balken 4 geführt und in das Innengewinde 8 der Öffnung 7 im Balken 4 eingeschraubt.

Die Hülse 6 ist in den Figuren 2 und 3 detaillierter dargestellt. Im vorderen Teil ist über eine umlaufende Nut 22 ein Einführende 23 mit einer umlaufenden konischen Anschrägung 24 und einem parallel zur Längsachse L3 verlaufenden Schlitz 25 abgesetzt. Die Anschrägung 24 dient dem leichteren Einführen der Hülse in das Bohrloch 17. Der Schlitz 25 bewirkt außerdem, dass die Hülse 6 radial, also senkrecht zur Längsachse L3, etwas zusammengedrückt werden kann, was wiederum das Einführen insbesondere bei einem engen Bohrloch 17 erleichtert. Die Hülse 6 ist mittig und parallel zur Längsachse L3 von einem Schraubenloch 26 durchsetzt. Am Außenumfang des Grundkörpers 11 sind außerdem gegenüberliegend zwei parallel zur Längsachse L3 verlaufende, radial abstehende Rippen 27 angeordnet. Diese Rippen 27 greifen im Bereich des Bohrlochs 17 in die Gipskartonplatte 3 ein und verhindern dadurch ein ungewolltes Verdrehen der Hülse 6 gegenüber der Gipskartonplatte 3. Radial gegenüber der Federlasche 15 ist ein Eingriffselement 28 angeordnet. Das Eingriffselement 28 ist durch einen abgewinkelten Federarm 29 gebildet, der in Längsrichtung etwa mittig einstückig an den Grundkörper 11 mit einem ersten Schenkel 30 angebunden und in Richtung nach hinten durch zwei Längsschlitze 31 vom Grundkörper 11 getrennt ist. Der erste Schenkel 30 erstreckt sich parallel zur Längsachse L3 bis zum Kragen 12 und geht dort in einen zweiten Schenkel 32 über, der schräg nach außen und hinten absteht und mit dem ersten Schenkel 30 einen Winkel von etwa 130 Grad einschließt. Am hinteren Ende des zweiten Schenkels 32 ist ein wiederum parallel zur Längsachse L3 verlaufender, kurzer Fortsatz 33 angeordnet. Der zweite Schenkel 32 bildet mit seinem kurzen Fortsatz 33 ein Manipulierelement 34 des Eingriffselements 28. Der Bereich der Anbindung des Federarms 29 an den Grundkörper bildet aufgrund der Elastizität des Kunststoffs eine Schwenkachse A, die senkrecht zur Längsachse L3 angeordnet ist. In Längsrichtung etwa mittig ist am ersten Schenkel 30 ein Vorsprung 35 angeordnet (siehe Figur 3), mit dem das Eingriffselement 28 radial nach innen in das Schraubenloch 26 ragt. Der Vorsprung 35 ist im Längsschnitt nasenförmig und bildet hinten eine Aufstandsfläche 36, die senkrecht zur Längsachse L3 steht, und vorne eine Schrägfläche 37, die schräg geneigt zur Längsachse L3 steht.

Die Schraube 21 weist ein Maschinengewinde 38 in Form eines metrischen Gewindes 39 auf und wird bei der zuvor beschriebenen Herstellung einer Befestigungsanordnung mit ihrem dem Kopf gegenüberliegenden vorderen Ende (nicht dargestellt) voraus von hinten in die Hülse 6 gesteckt, bis sie an der Aufstandsfläche 36 ansteht. Sie kann von dieser Position aus durch Drehen durch das Schraubenloch 26 hindurch bis zum Balken 4 geschraubt werden. Greift das Maschinengewinde 38 nicht sofort im Innengewinde 8 des Balkes 4, so bewirkt ein weiteres Drehen der Schraube 21 statt einem Abheben des Balkens 4 von der Hinterseite 18 der Gipskartonplatte 3, ein radiales Ausweichen des Eingriffselements 28 aufgrund der Schrägfläche 37. Das Eingriffselement 28 wird dabei elastisch entgegen der Federkraft des Federarms 29 um die Schwenkachse A verschwenkt und schwenkt nach einer Umdrehung der Schraube 21 wieder in die in Figur 3 gezeigte Ausgangsposition zurück. Wird die Montage irrtümlicherweise in diesem Zustand beendet, so kann die Schraube 21 mit relativ niedriger Kraft, deutlich unter der vorgesehenen Gebrauchslast, aus der Hülse 6 gezogen werden, wobei das Eingriffselement 28 wie oben beschrieben automatisch radial ausweicht. Dies signalisiert dem Verwender die Fehlmontage. Sobald die Schraube 21 jedoch das Innengewinde 8 getroffen hat, kann es in dieses eingeschraubt werden, wie dies bereits beschrieben ist.

Zum Eindrehen der Schraube 21 ab dem Anstehen an der Aufstandsfläche 36 bis zum Anstehen am Balken 4 sind viele Umdrehungen notwendig. Durch Druck auf den Fortsatz 33 des zweiten Schenkels 32 parallel zur Längsachse L3 in Deaktivierungsrichtung F wird das Eingriffselement 28 um die Schwenkachse A verschwenkt, wodurch es radial nach außen bewegbar ist. Die Manipulation durch den Bediener erfolgt dabei von der Rückseite 20 der Hülse 6 aus. Das Eingriffselement 28 wird dadurch deaktiviert, was entgegen der Federkraft des Federarms 29 erfolgt. Durch das Deaktivieren vergrößert sich eine lichte Weite des Schraubenlochs 26, so dass die Schraube 21 ohne Drehung bis zum Anstehen am Balken 4 eingeschoben werden kann. Dies verkürzt die Montagezeit erheblich und sorgt für eine anwenderfreundliche Handhabung.

Der Druck auf den Fortsatz 33 kann einerseits unmittelbar, beispielsweise mit einem Finger des Verwenders, ausgeübt werden, oder der zu befestigende Gegenstand wird vom Verwender gegen die Rückseite 20 und damit gegen den zweiten Schenkel 32 gedrückt. Durch Nachlassen des Drucks kommt es aufgrund der Federkraft des Federarms 29 zu einer Rückstellung und damit Aktivierung des Eingriffselements 28.

### Bezuqszeichenliste

### Kippdübel

- 1: Kippdübel
- 2: Dünnwandiges Bauteil
- 3: Gipskartonplatte
- 4: Balken
- 5: Band
- 6: Hülse
- 7: Öffnung
- 8: Innengewinde
- 9: Zahnelemente
- 10: Griffelement
- 11: Grundkörper der Hülse 6
- 12: Kragen der Hülse 6
- 13: Durchführöffnung
- 14: Rastelement
- 15: Federlasche
- 16: Nase
- 17: Bohrloch in der Gipskartonplatte 3
- 18: Hinterseite der Gipskartonplatte 3
- 19: Vorderseite der Gipskartonplatte 3
- 20: Rückseite der Hülse 6
- 21: Schraube
- 22: Nut
- 23: Einführende der Hülse 6
- 24: Anschrägung
- 25: Schlitz
- 26: Schraubenloch
- 27: Rippe
- 28: Eingriffselement
- 29: Federarm
- 30: Erster Schenkel
- 31: Längsschlitz
- 32: Zweiter Schenkel
- 33: Fortsatz
- 34: Manipulierelement
- 35: Vorsprung
- 36: Aufstandsfläche
- 37: Schrägfläche
- 38: Maschinengewinde
- 39: Metrisches Gewinde
- A: Schwenkachse
- F: Deaktivierungsrichtung
- L1: Balkenlängsachse
- L2: Öffnungslängsachse
- L3: Längsachse der Hülse 6

## Patentansprüche

1. Kippdübel (1) zur Befestigung eines Gegenstandes an einem dünnwandigen Bauteil (2),
- mit einem Balken (4) zum Hintergreifen des Bauteils (2), der sich entlang einer Balkenlängsachse (L1) erstreckt und eine Öffnung (7) zur Aufnahme einer Schraube (21) aufweist, wobei die Öffnung (7) sich entlang einer Öffnungslängsachse (L2) quer zur Balkenlängsachse (L1) erstreckt,
- mit einem lang gestreckten Band (5), das mit dem Balken (4) verbunden ist, das zum Halten und zur Positionierung des Balkens (4) bei der Montage dient, und das insbesondere Zahnelemente (9) aufweist, und
- mit einer Hülse (6), die eine Durchführöffnung (13) zum Durchführen des Bands (5) und insbesondere mindestens ein Rastelement (14) zum Eingriff in die Zahnelemente (9) aufweist,
wobei die Hülse (6) ein Schraubenloch (26), das sich entlang einer Längsachse (L3) erstreckt, zum Durchführen der Schraube (21) aufweist, wobei die Hülse (6) ein Eingriffselement (28) aufweist, das radial zur Längsachse (L3) in das Schraubenloch (26) ragt für einen Gewindeeingriff der Schraube (21),
**dadurch gekennzeichnet,**
**dass** das Eingriffselement (28) ein Manipulierelement (34) derart aufweist, dass das Eingriffselement (28) radial zur Längsachse (L3) nach außen bewegbar ist, und dass das Eingriffselement (28) von einer dem Balken (4) abgewandten Rückseite (20) der Hülse (6) aus manipulierbar ist.

2. Kippdübel nach Anspruch 1, **dadurch gekennzeichnet, dass** das Eingriffselement (28) schwenkbar mit einem Grundkörper (11) der Hülse (6) verbunden ist und dass die Schwenkachse (A) am der Rückseite (20) der Hülse (6) gegenüberliegenden Ende des Eingriffselements (28) angeordnet ist.

3. Kippdübel nach Anspruch 1 oder 2, **dadurch gekennzeichnet, dass** das Eingriffselement (28) federnd mit einem Grundkörper (11) der Hülse (6) verbunden ist.

4. Kippdübel nach Anspruch 3, **dadurch gekennzeichnet, dass** das Eingriffselement (28) als abgewinkelter Federarm (29) ausgebildet ist, wobei ein erster Schenkel (30) des Federarms (29) einen radial zur Längsachse (L3) nach innen ragenden Vorsprung (35) aufweist und ein zweiter Schenkel (28) das Manipulierelement (34) bildet.

5. Kippdübel nach Anspruch 4, **dadurch gekennzeichnet, dass** sich der erste Federarm (29) im Wesentlichen parallel zur Längsachse (L3) und der zweite Federarm senkrecht oder schräg zur Längsachse (L3) erstreckt.

6. Kippdübel nach einem der Ansprüche 1 bis 5, **dadurch gekennzeichnet, dass** das Eingriffselement (28) eine zur Rückseite (20) der Hülse (6) gewandte Aufstandsfläche (36) aufweist, die sich im Wesentlichen senkrecht zur Längsachse (L3) erstreckt.

7. Kippdübel nach einem der Ansprüche 1 bis 6, **dadurch gekennzeichnet, dass** das Eingriffselement (28) eine von der Rückseite (20) der Hülse (6) abgewandte Schrägfläche (37) aufweist, die sich schräg zur Längsachse (L3) erstreckt.

8. Kippdübel nach einem der Ansprüche 1 bis 7, **dadurch gekennzeichnet, dass** dem Kippdübel (1) eine Schraube (21) mit einem Maschinengewinde (38) zugeordnet ist.

## Claims

1. Toggle fixing (1) for fixing an article to a thin-walled component (2),
- having a crosspiece (4) for engaging behind the component (2), which crosspiece extends along a crosspiece longitudinal axis (L1) and has an opening (7) for receiving a screw (21), the opening (7) extending along an opening longitudinal axis (L2) transversely with respect to the crosspiece longitudinal axis (L1),
- having an elongated strip (5), which is connected to the crosspiece (4) and serves for holding and positioning the crosspiece (4) during mounting and which especially has tooth elements (9), and
- having a sleeve (6), which has a through-opening (13) for passage of the strip (5) and especially has at least one locking element (14) for engagement in the tooth elements (9),
wherein the sleeve (6) has a screw hole (26), which extends along a longitudinal axis (L3), for passage of the screw (21), the sleeve (6) having an engagement element (28) which projects into the screw hole (26) radially with respect to the longitudinal axis (L3) for threaded engagement of the screw (21),
**characterised in that**
the engagement element (28) has a manipulating element (34) such that the engagement element (28) is movable radially outwards relative to the longitudinal axis (L3), and the engagement element (28) is manipulatable from a rear side (20) of the sleeve (6) remote from the crosspiece (4).

2. Toggle fixing according to claim 1, **characterised in that** the engagement element (28) is pivotally connected to a main body (11) of the sleeve (6), and the pivot axis (A) is arranged at the end of the engagement element (28) opposite the rear side (20) of the sleeve (6).

3. Toggle fixing according to claim 1 or 2, **characterised in that** the engagement element (28) is resiliently connected to a main body (11) of the sleeve (6).

4. Toggle fixing according to claim 3, **characterised in that** the engagement element (28) is in the form of an angular resilient arm (29), wherein a first limb (30) of the resilient arm (29) has a projection (35) which projects radially inwards relative to the longitudinal axis (L3), and a second limb (28) forms the manipulating element (34).

5. Toggle fixing according to claim 4, **characterised in that** the first resilient arm (29) extends substantially parallel to the longitudinal axis (L3) and the second resilient arm extends perpendicularly or at an angle to the longitudinal axis (L3).

6. Toggle fixing according to any one of claims 1 to 5, **characterised in that** the engagement element (28) has a support surface (36) facing towards the rear side (20) of the sleeve (6), which support surface extends substantially perpendicularly to the longitudinal axis (L3).

7. Toggle fixing according to any one of claims 1 to 6, **characterised in that** the engagement element (28) has a sloping surface (37) facing away from the rear side (20) of the sleeve (6), which sloping surface extends at an angle to the longitudinal axis (L3).

8. Toggle fixing according to any one of claims 1 to 7, **characterised in that** the toggle fixing (1) is assigned a screw (21) having a machine thread (38).

## Revendications

1. Cheville basculante (1) conçue pour fixer un objet à une partie structurelle (2) à paroi mince, comprenant
- un fût (4) qui est destiné à emprisonner par-derrière la partie structurelle (2), s'étend le long d'un axe longitudinal (L1) et est muni d'un orifice (7) affecté à la réception d'une vis (21), lequel orifice (7) s'étend le long d'un axe longitudinal (L2), transversalement par rapport à l'axe longitudinal (L1) dudit fût,
- une bande longiligne (5) reliée au fût (4), servant à la retenue et au positionnement dudit fût (4) au stade du montage, et notamment pourvue d'éléments dentés (9), et
- une douille (6) comprenant un orifice traversant (13) dévolu au passage de ladite bande (5) et, en particulier, au moins un élément encliquetable (14) destiné à pénétrer dans lesdits éléments dentés (9),
la douille (6) comportant un trou de vissage (26) s'étendant le long d'un axe longitudinal (L3), en vue du passage traversant de la vis (21), ladite douille (6) étant dotée d'un élément (28) de venue en prise qui s'engage dans ledit trou de vissage (26), radialement par rapport audit axe longitudinal (L3), pour une venue en prise par filetage de ladite vis (21),
**caractérisée par le fait**
**que** l'élément (28) de venue en prise est muni d'un élément de manipulation (34), de telle sorte que ledit élément (28) de venue en prise puisse être mû vers l'extérieur, dans le sens radial par rapport à l'axe longitudinal (L3) ; et par le fait que ledit élément (28) de venue en prise peut être manipulé à partir d'une face postérieure (20) de la douille (6) qui pointe à l'opposé du fût (4).

2. Cheville basculante selon la revendication 1, **caractérisée par le fait que** l'élément (28) de venue en prise est relié, de manière pivotante, à un corps de base (11) de la douille (6) ; et **par le fait que** l'axe de pivotement (A) se trouve à l'extrémité dudit élément (28) de venue en prise située à l'opposé de la face postérieure (20) de ladite douille (6).

3. Cheville basculante selon la revendication 1 ou 2, **caractérisée par le fait que** l'élément (28) de venue en prise est relié élastiquement à un corps de base (11) de la douille (6).

4. Cheville basculante selon la revendication 3, **caractérisée par le fait que** l'élément (28) de venue en prise est réalisé sous la forme d'un bras élastique coudé (29), sachant qu'une première branche (30) dudit bras élastique (29) est pourvue d'une saillie (35) dépassant vers l'intérieur, dans le sens radial par rapport à l'axe longitudinal (L3), et qu'une seconde branche (32) matérialise l'élément de manipulation (34).

5. Cheville basculante selon la revendication 4, **caractérisée par le fait que** le premier bras élastique (29) s'étend pour l'essentiel parallèlement à l'axe longitudinal (L3), et le second bras élastique s'étend perpendiculairement ou à l'oblique par rapport audit axe longitudinal (L3).

6. Cheville basculante selon l'une des revendications 1 à 5, **caractérisée par le fait que** l'élément (28) de venue en prise est muni d'une surface de contact (36) tournée vers la face postérieure (20) de la douille (6) et s'étendant, pour l'essentiel, perpendiculairement à l'axe longitudinal (L3).

7. Cheville basculante selon l'une des revendications 1 à 6, **caractérisée par le fait que** l'élément (28) de venue en prise est muni d'une surface inclinée (37) tournée à l'opposé de la face postérieure (20) de la douille (6), et s'étendant à l'oblique par rapport à l'axe longitudinal (L3).

8. Cheville basculante selon l'une des revendications 1 à 7, **caractérisée par le fait qu'**une vis (21) pourvue d'un filetage machine (38) est associée à ladite cheville basculante (1).
